# EUROPÄISCHE PATENTSCHRIFT

(11) **EP 1 206 885 B1**
(45) Veröffentlichungstag und Bekanntmachung des Hinweises auf die Patenterteilung: **22.02.2006**
(21) Anmeldenummer: 00962403.2
(22) Anmeldetag: 28.08.2000
(51) Int. Cl.: H04Q 3/66, H04Q 3/00

(54) **METHODE ZUR VERBESSERUNG DER LASTTEILUNG**
METHOD FOR IMPROVING LOAD DISTRIBUTION
PROCEDE D'AMELIORATION DE LA REPARTITION DE LA CHARGE

(30) Priorität: 27.08.1999 DE 19940754
(43) Veröffentlichungstag der Anmeldung: 22.05.2002
(73) Patentinhaber: SIEMENS AKTIENGESELLSCHAFT, 80333 München (DE)
(72) Erfinder: TÜXEN, Michael, 81479 München (DE); GRADISCHNIG, Klaus, David, 20190 Reston, VA 20194-1977 (US)
(86) Internationale Anmeldenummer: PCT/EP2000/008390
(87) Internationale Veröffentlichungsnummer: WO 2001/017279

(56) Entgegenhaltungen:
- EP-A- 0 669 737
- FRANKLIN M A ET AL: "A general matrix iterative model for dynamic load balancing" PARALLEL COMPUTING,NL,ELSEVIER PUBLISHERS, AMSTERDAM, Bd. 22, Nr. 7, 1. Oktober 1996 (1996-10-01), Seiten 969-989, XP004013489 ISSN: 0167-8191

## Beschreibung

Methode zur Verbesserung der Lastteilung
1. Welches technische Problem soll durch Ihre Erfindung gelöst werden?
2. Wie wurde dieses Problem bisher gelöst?
3. In welcher Weise löst Ihre Erfindung das angegebene technische Problem (geben Sie Vorteile an)?
4. Ausführungsbeispiel[e] der Erfindung
   Zu 1. :Zur Lastteilung in verteilten Systemen benutzt man häufig Größen, von denen man annimmt, daß sie geeignet verteilt sind. Hier soll der Fall betrachtet werden, bei dem diese Größen Bitvektoren der Länge N sind. Eine solche Größe kann 2^N (lies "2 hoch N") Werte annehmen.

Nun kann es in der Anwendung vorkommen, daß die Annahme der geeigneten Verteilung verletzt ist, indem einige Bits des Bitvektors konstant sind oder zumindest nicht geeignet variieren, aber die Werte, die die Größe annimmt, mit trotzdem geeigneter Verteilung angenommen werden. Die Anzahl der konstanten Bits werde im folgenden stets mit k bezeichnet. Man kann damit nicht alle 2^N Werte zur Lastteilung benutzen, sondern nur die verbleibenden 2^(N-k) Werte.

Um in einem solchen Fall eine geeignete Lastteilung durchzuführen, braucht man ein Verfahren, welches einem aus den Bitvektoren der Länge N solche der Länge n erzeugt, die geeignet verteilt sind. Dabei gilt n<=N-k.

### Zu 2. :

Die bisherigen Lösungen gehen davon aus, daß man weiß, welche k Bits konstant sind. Dann kann man n = N-k wählen und einfach die konstanten Komponenten aus dem Bitvektor der Länge N streichen. Dazu muß man dann beim Lastteilungsverfahren administrativ einstellen, welche k Bits der N Bits konstant sind.

Dies ist einerseits eventuell mit relativ viel Aufwand verbunden, andererseits weiß man beim Einrichten des Systems vielleicht aber noch nicht, welche k Bits konstant sind. Ebenfalls ist es denkbar, daß nach Änderungen der Konfiguration oder aus anderen Gründen es sich ändern kann, welche k Bits konstant sind.

Daher ist ein Verfahren wünschenswert, welches einem aus den Bitvektoren der Länge N solche der Länge n erzeugt, die geeignet verteilt sind, und welches dabei auf die Information, welche k Bits konstant sind, verzichten kann.

### Zu 3. :

Die hier beschriebene Erfindung ermöglicht es, aus gegebenen Bitvektoren der Länge N, bei denen k Bits (praktisch) konstant sind, Bitvektoren der Länge n zu gewinnen, so daß alle 2^n Werte mit geeigneter Verteilung angenommen werden. Dabei ist n <=N-k und im allgemeinen gilt n<N-k. Damit ist es dann möglich, eine Lastteilung mit Lastteilungsgrößen, die 2^n Werte annehmen, durchzuführen, wenn die dazu gegebene Größe zwar N Bits lang ist, aber k Bits (praktisch) konstant sind und man nicht weiß, welche k Bits dies sind. Dadurch lassen sich die unter 2. angegebenen Nachteile der bisherigen Lösung umgehen.

Zu bemerken ist, daß ein Verfahren, welches das Problem für (n,k,N) löst, auch eine Lösung für (n,j,N) mit j<k darstellt. Auch ist es eine Lösung, wenn die k Bits nicht konstant, sondern nur ungeeignet verteilt sind.

Der erfindungsgemäße Lösung beruht darauf, daß man aus Bitvektoren der Länge N mit bis zu k (praktisch) konstanten Komponenten Bitvektoren der Länge n berechnet, von denen keine Komponenten konstant sind, und daß man die fehlende Information, welche k Bits konstant sind, dadurch ersetzt, daß man eventuell n < N-k wählt. Man benutzt also N-k-n variierende Komponenten, um diese fehlende Information zu ersetzen. Daher ist verständlich, daß man, wenn man weiß, welche k Bits konstant sind, durch die administrative Lösung n=N-k erreichen kann.

### Zu 4. :

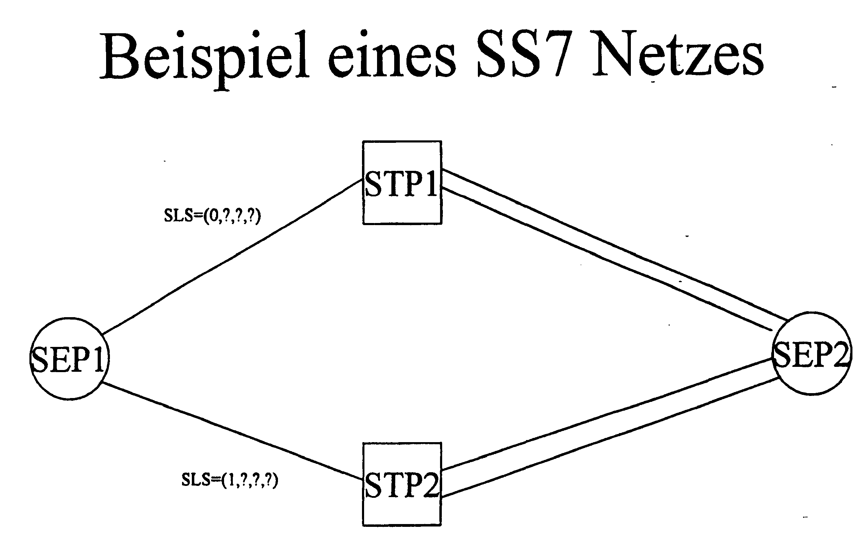

Als Ausführungsbeispiel wird ein SS7 Netz gemäß der Zeichnung (siehe Figur) betrachtet, das zur Übertragung von ISUP-Nachrichten benutzt wird. Dabei benutzt SEP1 das erste Bit des SLS-Feldes der ISUP-Nachricht, um zu entscheiden, ob die Nachricht über STP1 oder STP2 zu SEP2 geschickt wird. Dies bedeutet aber, daß bei STP1 und STP2 das erste Bit der SLS-Felder konstant ist. Gibt es mehrere STPs, so ist es nicht mehr so leicht ersichtlich, welche Bits konstant sind. Ebenso kann es sein, das mehrere Bits konstant sind. Die ISUP-Nachrichten enthalten alle ein Feld CIC, das als Lastteilungsgröße genutzt werden kann. Da man gemäß Standard aber als Lastteilungsgröße (SLS) einen Bitvektor der Länge 4 braucht, so benutzt man normalerweise als SLS die 4 niedrigwertigsten Bits des CIC.

Hier kann man nun die N niedrigwertigsten Bits des CIC benutzen um einen Bitvektor der Länge 4 als Lastteilungsgröße zu berechnen unter der Annahme, daß höchstens k Bits unter den ersten N Bits des CICs konstant sind. Verfahren, um diesen Lastteilungsschlüssel für die Fälle k=1, N=5 und k=2, N=7 zu berechnen, sind im Anhang angegeben.

Damit kann STP1 und STP2 die Lastteilung wieder auf einer Lastteilungsgröße basieren, die dem Standard gemäß 16 verschiedene Werte annimmt.

Beide Fälle sind in der Praxis von Bedeutung. Generell kann nämlich davon ausgegangen werden, das der CIC in den ersten 5 Bits variiert, da diese Bits laut Standard die Zeitschlitznummer des betroffenen Kanals in einem PCM30 Übertragungssystem (siehe Q.763 und G.732) enthalten. In digitalen übertragungssystemen mit 8448 kbit/s variieren sogar die ersten 7 Bits des CIC aus denselben Gründen (siehe Q.763 und G.744).

Bezüglich einer Realisierung der Berechnung des Lastteilungsschlüssels ist zu bemerken, daß dies vorteilhaft durch einen Tabellenzugriff auf eine Tabelle erfolgen kann.

Als weiteres Ausführungsbeispiel kann man einen verteilten Server betrachten, auf welchen über TCP/IP zugegriffen wird. Hierbei kann man die IP Adresse des Clients zur Lastverteilung im verteilten System benutzen, wobei dadurch die oft wünschenswerte Eigenschaft gewährleistet ist, daß Anfragen vom selben Client immer auf der selben Einheit des verteilten Servers behandelt werden. Die Klassenstruktur der IP Adressen bringt es mit sich, daß in der Praxis häufig gewisse Bits konstant sind, deren genaue Position hingegen im allgemeinen nicht bekannt ist. Mit dem erfindungsgemäßen Verfahren kann dann analog zum ersten Ausführungsbeispiel aus den IP Adressen der Clients eine geeignete Lastteilungsgröße bestimmt werden.

### Anhang

Im folgenden werden Vektorräume über dem Körper F mit 2 Elementen betrachtet. Dies liegt in der Interpretation der Größen als Bitvektoren begründet. Die angegebene Argumentation ist aber über beliebigen Körpern gültig. Ferner werden Vektoren stets als Spaltenvektoren aufgefaßt und lineare Abbildungen mit Matrizen identifiziert. Dazu ,wird stets die kanonische Basis verwendet.

Es soll nun ein Verfahren zur Berechnung einer Lastteilungsgröße angegeben werden, daß bei dem angegebenen Ausführungsbeispiel Verwendung finden kann.

Dazu betrachten wir Bitvektoren der Länge N als Zufallsvariablen von denen man weiß, daß bis zu k Komponenten konstant sind bzw. nicht genügend variieren und die 2^(N-k) Werte jeweils mit der Wahrscheinlichkeit 1/2^(N-k) angenommen werden. Um daraus Bitvektoren der Länge n, n <= N-k, zu gewinnen, die alle Werte mit der Wahrscheinlichkeit 1/2^n annehmen kann man wie folgt vorgehen:

Man konstruiert die Abbildung von F^N nach F^n als lineare Abbildung A. Diese muß die Eigenschaft haben, daß alle n x (N-k) Untermatrizen den maximalen Rang n haben. Wie man dann leicht nachrechnet, erfüllt diese Abbildung dann die Eigenschaft, daß die Bitvektoren der Länge n alle Werte mit der Wahrscheinlichkeit 1/2^n annimmt. Matrizen mit obiger Eigenschaft existieren über F nicht für alle Parameter n, N, k. Aber es sollen zwei für das Ausführungsbeispiel wichtige Beispiele angegeben werden:

Im Fall N=5, n=4, k=1 kann man für A wählen:

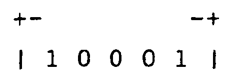

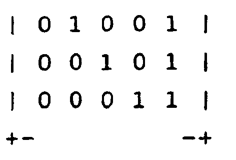

oder

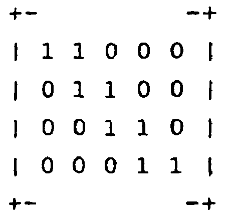

Der Vorteil der zweiten Matrix ist, daß sich die dadurch gegebene Abbildung leicht durch Shift und XOR Verknüpfungen realisieren läßt.

Im Fall N=7, n=4, k=2 kann man für A wählen:

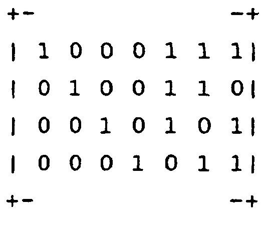

Um diese Abbildung effizient auf einem Computer zu berechnen, benutzt man eine Tabelle mit einem Index von 7 Bits. Die einmalige Berechnung dieser Tabelle muß dann nicht effizient implementiert werden.

## Patentansprüche

1. Verfahren zur Lastverteilung in einem verteilten System, demgemäß
a) eine Nachricht von einer Komponente des verteilten Systems auf eine von mehreren anderen Komponenten des Systems verteilt wird,
b) zu der genannten Verteilung N Bits der Nachricht herangezogen werden, wobei k Bits der genannten N Bits konstant sind bzw. für die Verwendung zu der genannten Verteilung ungeeignet sind,
c) die genannten N Bits einem ersten Bitvektor der Größe N zugeordnet werden,
d) aus dem genannten ersten Bitvektor ein zweiter Bitvektor der Größe n mit n<=N-k erzeugt wird, durch dessen Bitwert festgelegt ist, auf welche andere Komponente die genannte Nachricht verteilt wird, wobei der genannte zweite Bitvektor aus dem ersten Bitvektor mithilfe einer linearen Abbildung erzeugt wird, deren Matrix n x N so gewählt wird, dass alle n x (N-k) Untermatrizen der genannten Matrix den maximalen Rang, nämlich den Rang n haben.

2. Verfahren nach Anspruch 1,
**dadurch gekennzeichnet, dass**
die genannten N Bits jeweils der zu verteilenden Nachricht entnommen werden oder, wenn die Nachricht direkt in der Komponente erzeugt wurde, auch vom Erzeuger der Nachricht direkt zur Verfügung gestellt werden.

3. Verfahren nach Anspruch 1 oder 2,
**dadurch gekennzeichnet, dass**
es in einem Knoten eines Signalisierungsnetzes angewandt wird.

4. Verfahren nach Anspruch 3,
**dadurch gekennzeichnet, dass**
es in einem Knoten (SEP, STP) des Signalisierungsnetzes Nr.7 angewandt wird.

5. Verfahren nach Anspruch 3 oder 4,
**dadurch gekennzeichnet, dass**
die genannten N Bits aus dem CIC bzw. einen Teil des CIC entnommen werden.

6. Verfahren nach Anspruch 1 oder 2,
**dadurch gekennzeichnet, dass**
es in einer Client-Komponente eines Server-Client-Systems angewandt wird.

7. Verfahren nach Anspruch 6,
**dadurch gekennzeichnet, dass**
die genannten N Bits aus der IP-Adresse bzw. einem Teil der IP-Adresse des Client entnommen werden.

8. Komponente eines verteilten Systems, die
a) eine Nachricht auf eine von mehreren anderen Komponenten des Systems verteilt,
b) zu der genannten Verteilung N Bits der Nachricht heranzieht, wobei k Bits der genannten N Bits konstant sind bzw. für die Verwendung zu der genannten Verteilung ungeeignet sind,
c) die genannten N Bits einem ersten Bitvektor der Größe N zuordnet,
d) aus dem genannten ersten Bitvektor einen zweiten Bitvektor der Größe n mit n<=N-k erzeugt, durch dessen Bitwert festgelegt ist, auf welche andere Komponente sie die genannte Nachricht verteilt, wobei sie den genannten zweiten Bitvektor aus dem ersten Bitvektor mithilfe einer linearen Abbildung erzeugt, deren Matrix n x N so gewählt ist, dass alle n x (N-k) Untermatrizen der genannten Matrix den maximalen Rang, nämlich den Rang n haben.

9. Komponente nach Anspruch 8,
**dadurch gekennzeichnet, dass**
sie die genannten N Bits jeweils der zu verteilenden Nachricht entnimmt oder, wenn die Nachricht direkt in ihr erzeugt wurde, vom Erzeuger der Nachricht erhält.

10. Komponente eines verteilten Systems,
**dadurch gekennzeichnet, dass**
es sich bei dem verteilten System um ein Signalisierungsnetz handelt und bei der Komponente um einen Netz-Knoten des Signalisierungsnetzes.

## Revendications

1. Procédé pour la répartition de charge dans un système réparti, selon laquelle
a) un message est réparti d'un composant du système réparti à l'un des plusieurs autres composants du système,
b) pour ladite répartition, on a recours à N bits du message, k bits desdits N bits étant constants resp. n'étant pas appropriés pour l'utilisation pour ladite répartition,
c) lesdits N bits sont attribués à un premier vecteur de bits de grandeur N,
d) à partir dudit premier vecteur de bits, on génère un second vecteur de bits de grandeur n avec n < = N-k, par la valeur binaire duquel on définit sur quel autre composant ledit message est réparti, ledit second vecteur de bits étant généré à partir du premier vecteur de bits à l'aide d'une application linéaire, dont la matrice n x N est choisie de telle sorte que toutes les n x (N-k) sous-matrices de ladite matrice ont le rang maximum, c'est-à-dire le rang n.

2. Procédé selon la revendication 1,
**caractérisé en ce que**
lesdits N bits sont prélevés respectivement sur le message à répartir ou, si le message a été généré directement dans le composant, ils sont mis à disposition directement également par le générateur du message.

3. Procédé selon la revendication 1 ou 2,
**caractérisé en ce qu'**il est utilisé dans un noeud d'un réseau de signalisation.

4. Procédé selon la revendication 3,
**caractérisé en ce qu'**il est utilisé dans un noeud (SEP, STP) du réseau de signalisation numéro 7.

5. Procédé selon la revendication 3 ou 4,
**caractérisé en ce que**
lesdits N bits sont prélevés dans le CIC resp. une partie du CIC.

6. Procédé selon la revendication 1 ou 2,
**caractérisé en ce qu'**il est utilisé dans un composant de client d'un système serveur-client.

7. Procédé selon la revendication 6,
**caractérisé en ce que**
lesdits N bits sont prélevés de l'adresse IP ou d'une partie de l'adresse IP du client.

8. Composant d'un système réparti, qui
a) répartit un message sur un de plusieurs autres composants du système,
b) utilise pour ladite répartition N bits du message, k bits desdits N bits étant constants resp. n'étant pas appropriés pour l'utilisation pour ladite répartition,
c) attribue lesdits N bits à un premier vecteur de bits de grandeur N,
d) génère à partir dudit premier vecteur de bits un second vecteur de bits de grandeur n avec n < = N-k, par la valeur binaire duquel on définit sur quel autre composant il répartit ledit message, le composant génèrant ledit second vecteur de bits à partir du premier vecteur de bits à l'aide d'une application linéaire, dont la matrice n x N est choisie de telle sorte que toutes les n x (N-k) sous-matrices de ladite matrice ont le rang maximum, c'est-à-dire le rang n.

9. Composant selon la revendication 8,
**caractérisé en ce qu'**il prélève lesdits N bits respectivement dans le message à répartir ou, si le message a été généré directement dans le composant, reçoit le message du générateur.

10. Composant d'un système réparti,
**caractérisé en ce qu'**il s'agit d'un réseau de signalisation en ce qui concerne le système réparti et d'un noeud de réseau du réseau de signalisation en ce qui concerne le composant.

## Claims

1. Method for load distribution in a distributed system according to which
a) a message from one component of the distributed system is allocated to one of several other components of the system,
b) for the distribution cited, reference is made to N bits of the message, where k bits of the N bits mentioned are either constant or unsuitable for use in making the distribution referred to,
c) the N bits referred to are assigned to a first bit vector of size N,
d) from this first bit vector is generated a second bit vector, with a size of n where n<=N-k, the bit value of which determines which other component the message concerned is allocated to, with the second bit vector referred to being generated from the first bit vector with the help of a linear mapping, the n x N matrix for which is chosen so that all the n x (N-k) submatrices of the matrix concerned have the maximum rank, namely a rank of n.

2. Method in accordance with claim 1,
**characterized in that**
the N bits mentioned are in each case taken from the message which is to be distributed or, if the message is generated directly in the component, may also be made available directly by the generator of the message.

3. Method in accordance with one of claims 1 or 2,
**characterized in that**
it is applied in a node of a signalling network.

4. Method in accordance with claim 3,
**characterized in that**
it is applied in a node (SEP, STP) of an SS7 signalling network.

5. Method in accordance with claim 3 or 4,
**characterized in that**
the N bits mentioned are taken from the CIC or a part of the CIC, as appropriate.

6. Method in accordance with claim 1 or 2,
**characterized in that**
it is applied in a client component of a client-server system.

7. Method in accordance with claim 6
**characterized in that**
the N bits mentioned are taken from the client's IP address or a part of that IP address, as applicable.

8. Component of a distributed system which
a) allocates a message to one of several other components of the system,
b) for the distribution cited, makes reference to N bits of the message, where k bits of the N bits mentioned are either constant or unsuitable for use in making the distribution referred to,
c) assigns to a first bit vector of size N the N bits referred to,
d) from this first bit vector it generates a second bit vector, with a size of n where n<=N-k, the bit value of which determines the other component to which it allocates the message concerned, whereby it generates the second bit vector referred to from the first bit vector with the help of a linear mapping, the n x N matrix for which is chosen so that all the n x (N-k) submatrices of the matrix concerned have the maximum rank, namely a rank of n.

9. Component in accordance with claim 8,
**characterized in that**
in each case it takes the N bits mentioned from the message which is to be allocated or, if the message was generated directly within it, from the generator of the message.

10. Component of a distributed system
**characterized in that**
the distributed system concerned is a signalling network and the component is a network node of the signalling network
